(19) Europäisches Patentamt / European Patent Office / Office européen des brevets

(11) EP 1 777 696 A2

(12) EUROPEAN PATENT APPLICATION

(43) Date of publication:
25.04.2007 Bulletin 2007/17

(51) Int Cl.:
*G09G 5/10* (2006.01)

(21) Application number: 06122457.2

(22) Date of filing: 17.10.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 20.10.2005  KR 20050099313

(71) Applicant: SAMSUNG ELECTRONICS CO., LTD.
Suwon-si
Gyeonggi-do 442-742 (KR)

(72) Inventors:
• Na, Hong-ju
Anyang-si
Gyeonggi-do (KR)
• Park, Kil-soo
Ssangyong Apt. 107-1301
Gyeonggi-do (KR)
• Jang, Sung-hwan
Seongnam-si
Gyeonggi-do (KR)

(74) Representative: Robinson, Ian Michael
Appleyard Lees
15 Clare Road
Halifax, West Yorkshire HX1 2HY (GB)

(54) **Display apparatus and control method thereof**

(57)  A method and apparatus are provided for adjusting the contrast ratio in a display apparatus. The display apparatus includes a signal input module (10) which receives a video signal and a signal processing module (50) which processes the video signal received from the signal input module (10). A display module (70) has a display panel (77) and a panel driver (71, 73, 75) for driving the display panel (77), and a controlling module (90) calculates the luminance of the video signal and controls at least one of the signal processing module (50) and the panel driver (71, 73, 75) to adjust a contrast ratio of the video signal output to the display panel (77) based on the mean of the calculated luminance.

FIG. 1

EP 1 777 696 A2

**Description**

Methods and apparatuses consistent with the present invention relate to a display apparatus with an adjusted contrast ratio of a video signal, and a control method thereof.

In general, a display apparatus receives a video signal of a particular display mode input from a video signal source such as a computer or a TV broadcasting system and displays the received video signal on a display unit. Display apparatuses, such as flat display apparatuses which employ a Liquid Crystal Display (LCD) panel, a Plasma Display Panel (PDP) and the like, as well as display apparatuses which employ a Cathode Ray Tube (CRT) are widely used.

Display apparatuses which employ the PDP are being highly praised because they possess the high image quality of the CRT and small thickness of the LCD.

In general, the PDP display apparatus displays a video according to an Address and Display Separate (ADS) driving system in which data write time is separated from data display time. In such a PDP display apparatus, when a voltage of 150 V ~ 300 V is applied between a scan sustain electrode and an address electrode, address discharge is generated in a discharge cell between the scan sustain electrode and the address electrode, thus forming charges on an inner side of the discharge cell and leaving the formed charges on a dielectric layer.

In response to an alternate signal applied to a common sustain electrode and the scan sustain electrode, sustain discharge is generated in the discharge cell selected according to the address discharge. This sustain discharge generates an electric field within the discharge cell, thus accelerating electrons in discharge gases.

When the accelerated electrons collide with neutral particles, the neutral particles are decomposed into electrons and ions. These electrons collide with other neutral particles. Through repetitive collision of electrons with neutral particles, the discharge gases go into a plasma state and simultaneously a vacuum ultraviolet ray is generated.

The generated vacuum ultraviolet ray excites R, G and B fluorescent layers to generate a visible ray, and the generated visible ray emits to the outside through a front substrate, thus allowing a user to recognize the lighting of cells, i.e., to view a displayed video.

However, in the related art display apparatus, if a contrast ratio of a video is low, since an image displayed on a display unit is not clear, it is inconvenient for a user to watch such an image.

Exemplary embodiments of the present invention overcome the above disadvantages and other disadvantages not described above. Also, the present invention is not required to overcome the disadvantages described above, and an exemplary embodiment of the present invention may not overcome any of the problems described above.

According to the present invention there is provided an apparatus and method as set forth in the appended claims. Preferred features of the invention will be apparent from the dependent claims, and the description which follows.

An aspect of the present invention provides a display apparatus with an enhanced contrast ratio of a video signal forming the basis of images displayed on a display unit, and a control method thereof.

Also, the present invention provides a display apparatus comprising: a signal input module for receiving a video signal; a signal processing module for processing the video signal received from the signal input module; a display module having a display panel and a panel driver for driving the display panel; and a controlling module for calculating luminance of the video signal and controlling at least one of the signal processing module and the panel driver to adjust a contrast ratio of the video signal output to the display panel based on the mean of the calculated luminance.

According to an exemplary embodiment of the present invention, the controlling module calculates the mean of the luminance in the frame unit of the video signal.

According to an exemplary embodiment of the present invention, the controlling module adjusts a control factor to determine a gamma curve based on the mean of the luminance.

According to an exemplary embodiment of the present invention, the controlling module controls the signal processing module to adjust the contrast ratio of the video signal based on the gamma curve determined by the control factor.

According to an exemplary embodiment of the present invention, the controlling module adjusts predetermined average signal level (ASL) data based on the mean of the luminance and controls the panel driver to adjust the luminance of the video signal based on the video signal output from the signal processing module and the average signal level data.

According to an exemplary embodiment of the present invention, the display panel comprises a plasma display panel, a plurality of address electrodes, a plurality of X electrodes, and a plurality of Y electrodes, and the panel driver comprises an address driver for driving the address electrodes, an X electrode driver for driving the X electrodes, and a Y electrode driver for driving the Y electrodes.

According to an exemplary embodiment of the present invention, the controlling module adjusts the number of sustain pulses to determine the luminance of the video signal and controls the panel driver to generate the adjusted number of sustain pulses.

According to an exemplary embodiment of the present invention, the sustain pulses are generated by driving of the address driver, the X electrode driver and the Y electrode driver of the panel driver, and the controlling module outputs a control signal corresponding to the number of sustain pulses to the panel driver.

According to an exemplary embodiment of the present invention, the controlling module adjusts the gamma curve using at least one of an upper contrast enhancement value CE_upper, a cutoff contrast enhancement value CE_cutoff, an upper alpha value Alpha_upper, a low alpha value Alpha_low, and a white tilt White_tilt.

The foregoing and/or other aspects of the present invention are achieved by providing a control method of a display apparatus having a display panel that comprises a plasma display panel, a plurality of address electrodes, a plurality of X electrodes, and a plurality of Y electrodes, the control method comprising: receiving a video signal; calculating luminance of the video signal; and adjusting a contrast ratio of the video signal output to the display panel based on the mean of the calculated luminance of the video signal.

According to an exemplary embodiment of the present invention, calculating the luminance of the video signal comprises calculating the mean of the luminance in the frame unit of the video signal.

According to an exemplary embodiment of the present invention, the adjusting the contrast ratio of the video signal comprises: adjusting a control factor to determine a gamma curve based on the mean of the luminance; and adjusting the contrast ratio of the video signal based on the gamma curve determined by the control factor.

According to an exemplary embodiment of the present invention, the adjusting the contrast ratio of the video signal comprises: adjusting predetermined average signal level (ASL) data based on the mean of the luminance; and adjusting the luminance of the video signal based on the average signal level data.

According to an exemplary embodiment of the present invention, the adjusting the contrast ratio of the video signal comprises adjusting the number of sustain pulses to determine the luminance of the video signal and generating the adjusted number of sustain pulses.

The above and/or other aspects of the present invention will become apparent and more readily appreciated from the following description of the exemplary embodiments, taken in conjunction with the accompanying drawings of which:

Figure 1 is a control block diagram of a display apparatus according to an exemplary embodiment of the present invention;

Figure 2A is a graph showing variation of luminance of one frame in a video signal input to the display apparatus according to an exemplary embodiment of the present invention;

Figure 2B is a graph showing variation of a control factor depending on the variation of luminance of the video signal;

Figure 2C is a graph showing variation of average signal level data depending on the variation of luminance of the video signal;

Figures 2D to 2F are graphs showing variation of a gamma curve depending on variation of mean of the luminance of the video signal; and

Figure 3 is a control flow chart in the display apparatus according to the embodiment of the present invention.

Reference will now be made in detail to exemplary embodiments of the present invention, examples of which are illustrated in the accompanying drawings.

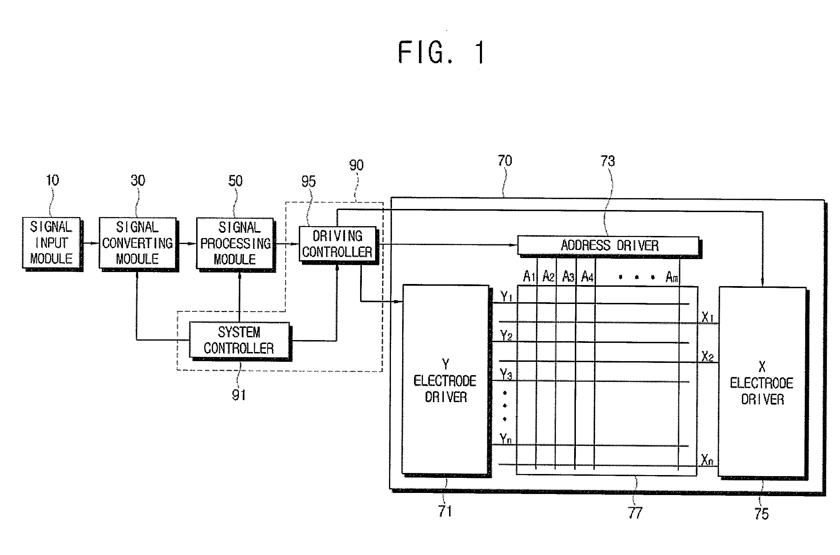

As shown in Figure 1, a display apparatus according to an exemplary embodiment of the present invention includes a display module 70, a signal input module 10, a signal converting module 30, a signal processing module 50, and a controlling module 90 for controlling these components.

The display module 70 includes a display panel 77 on which an image is displayed, and panel drivers 71, 73 and 75 for processing a video signal input from the signal processing module 50 and displaying the image on the display panel 77. Here, the display panel 77 is preferably but not necessarily a Plasma Display Panel (PDP).

The PDP display panel 77 includes a plurality of address electrodes A1 to Am arranged in a column direction, and a plurality of X electrodes X1 to Xn and Y electrodes Y1 to Yn arranged alternately in a row direction. Here, the X electrodes X1 to Xn are preferably but not necessarily connected together to form a common X electrode.

The panel drivers 71, 73 and 75 may include an address driver 73 which drives the address electrodes, an X electrode driver 75 which drives the X electrodes, and a Y electrode driver 71 which drives the Y electrodes. By driving of each of the address driver 73, the X electrode driver 75 and the Y electrode driver 71, a sustain pulse is generated for each pixel of an image to be displayed on the display module 70 based on the luminance of the video signal. For example, one sustain pulse may be generated if the luminance of the video signal of a particular cell within one frame of the video signal is 1, and 100 sustain pulses may be generated if the luminance of the video signal of a different cell within one frame of the video signal is 100. The sustain pulse allows light to be emitted from each pixel so that the video signal with predetermined luminance is displayed on the PDP display panel 77.

When the video signal is input to the signal input module 10, the signal input module 10 outputs the input video signal to the signal converting module 30. Here, the signal input module 10 may include at least one of input terminals (not shown) for receiving the video signal from a video source, such as a VCR or VTR, and an antenna (not shown) for receiving a broadcasting signal from a broadcasting station or the like.

The signal converting module 30 converts the video signal input through the signal input module 10 into a video signal which can be processed by the signal processing module 50, which will be described later. Here, the signal converting module 30 includes a tuner (not shown) for receiving and outputting a broadcasting signal such as a Radio Frequency (RF) signal input from the antenna, and a video decoder (not shown) for decoding an analog video signal such as a Composite Video Baseband Signal (CVBS) or S-video signal input from the input terminals or the broadcasting signal output from the tuner and outputting the decoded signal to the signal processing module 50.

Additionally, the signal converting module 30 may include a Transition Minimized Differential Signaling (TMDS) receiver for separating a digital video signal such as a DVI signal input from an external source through a digital connecting terminal (not shown) into an RGB digital signal and a H/V synchronization signal to be output to the signal processing module 50, and an A/D converter (not shown) for converting an analog video signal such as an input component signal or a PC signal into a digital video signal to be output to the signal processing module 50.

The signal processing module 50 processes and outputs the input video signal into a format which can be displayed on the display module 70. Here, the signal processing module 50 processes the video signal such that a video image corresponding to the video signal input from the signal converting module 30 is displayed on the display module 70, under control of the controlling module 90, which will be described later.

The controlling module 90 controls various modules in the display apparatus to perform their respective unique functions. Additionally, the controlling module 90 calculates the luminance of the video signal processed by the signal processing module 50 and controls a contrast ratio of the video signal based on the calculated luminance. The contrast ratio generally means a difference in brightness between highlight and shadow of a video signal.

The controlling module 90 includes a system controller 91 which calculates the luminance of the video signal processed by the signal processing module 50 and a driving controller 95 which controls the panel drivers 71, 73 and 75 based on the video signal luminance calculated in the system controller 91.

The controlling module 90 may control the signal processing module 50 and at least one of the panel drivers 71, 73 and 75 to calculate the mean of the luminance of the video signal and adjust the contrast ratio of the video signal based on the calculated mean of the luminance.

The system controller 91 calculates the mean of the luminance in the frame unit of the video signal, that is, in the period unit of a vertical synchronization signal in the video signal. For example, if the video signal has 60 frames per second, it is preferable but not necessary that the system controller 91 calculates the mean of the luminance for each frame. In this case, it is sufficient if the system controller 91 calculates the mean of the luminance for one frame. Alternatively, the system controller 91 may calculate the mean of the luminance for even frames, or for odd frames, and/or the like.

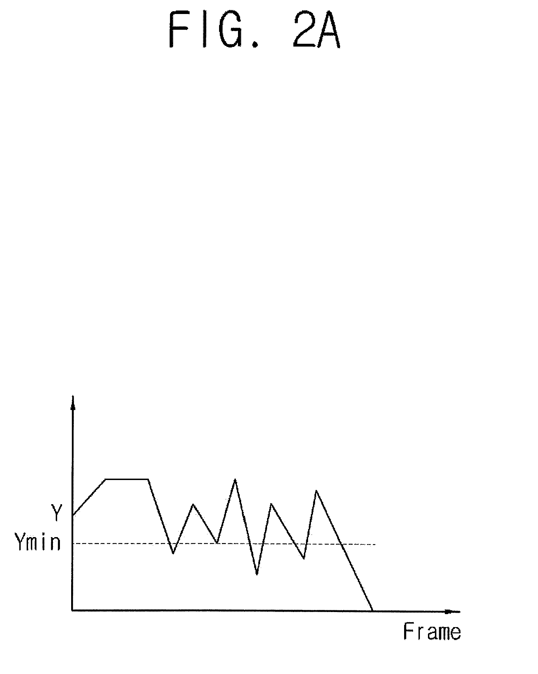

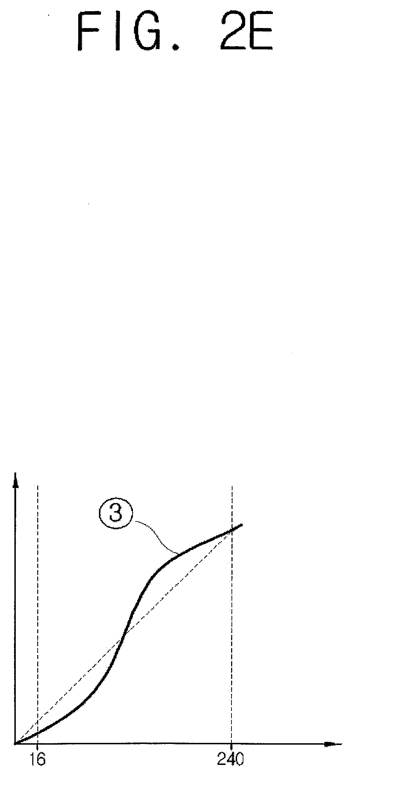

If the video signal luminance for one frame is distributed as shown in Figure 2A, for example, the system controlling module 91 may calculate the mean of the luminance Ymin according to a formula:

$$1/T \int_0^T f(x)dx$$ (where, T is a period of one frame and f(x) is a luminance function of the video signal).

The system controller 91 may adjust control factors to determine a gamma curve based on the mean of the luminance calculated for each frame. For example, the system controller 91 may adjust the gamma curve using at least one of an upper contrast enhancement value CE_upper, a cutoff contrast enhancement value CE_cutoff, an upper alpha value Alpha_upper, a low alpha value Alpha_low, and a white tilt White_tilt.

A relation between the control factors and the gamma curve, which is known in the field of display apparatuses using a DNIe (Digital Natural Image engine) system, will be described in brief.

In the gamma curve, the upper contrast enhancement value CE_upper determines a luminance value of the video signal output from the signal processing module 50, which corresponds to a predetermined point in a region having a high luminance value of the video signal input to the signal processing module 50, and the cutoff contrast enhancement value CE_cutoff determines the luminance value of the video signal output from the signal processing module 50, which corresponds to a predetermined point in a region having a low luminance value of the video signal input to the signal processing module 50. Additionally, in the gamma curve, the upper alpha value Alpha_upper determines a slope of the gamma curve in a region having a high luminance value of the video signal input to the signal processing module 50, the low alpha value Alpha_low determines the slope of the gamma curve in a region having a low luminance value of the video signal input to the signal processing module 50, and the white tilt White_tilt adjusts the gamma curve in a white portion, that is, in a region having a high luminance value of the video signal.

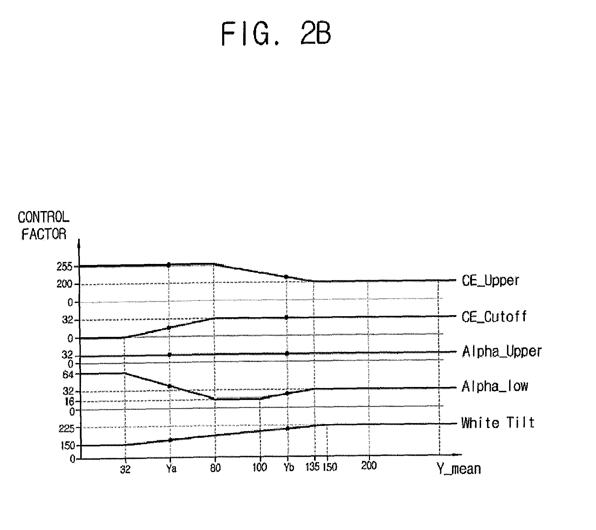

The respective control factors are varied depending upon the mean of the luminance of the video signal. For example, if the mean of the luminance changes from a point Ya to a point Yb, the respective control factors (at least one of the upper contrast enhancement value CE_upper, the cutoff contrast enhancement value CE_cutoff, the upper alpha value Alpha_upper, the low alpha value Alpha_low, and the white tilt White_tilt) are varied accordingly, as shown in Figure 2B. Thus, when the mean of the luminance of the video signal changes, the control factors are also varied to change a shape of the gamma curve.

Thus, in the display apparatus of the exemplary embodiments of the present invention, output luminance of the video signal, which is mapped to input luminance of the video signal, is varied depending upon the mean of the luminance of the video signal, as shown in Figures 2D to 2F.

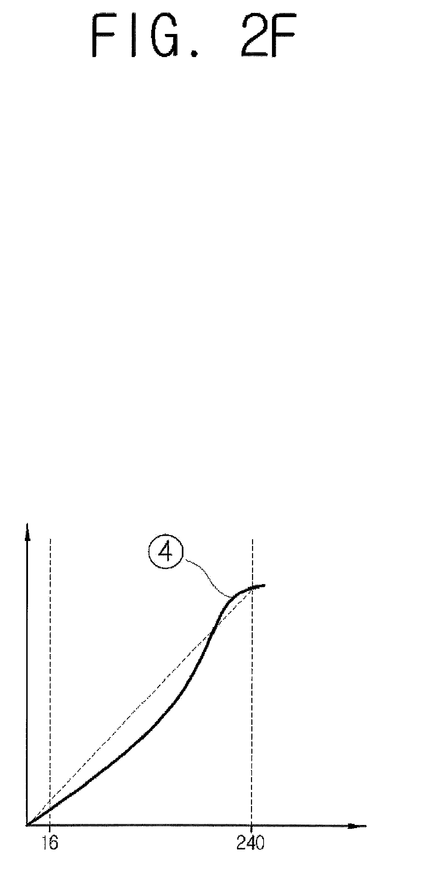

As shown in Figure 2D, the gamma curve representing a ratio of the input luminance to the output luminance of each pixel per frame of the video signal may be set as indicated by line ①. Here, according to line ①, the output luminance is decided in proportion to the input luminance. If the mean of the luminance per frame of the video signal is small (dark frame), the gamma curve has a shape indicated by curve ②. Additionally, if the mean of the luminance per frame of the video signal is medium (medium-bright frame), the gamma curve has a shape indicated by curve ③, as shown in Figure 2E, and, if the mean of the luminance per frame of the video signal is large (bright frame), the gamma curve has a shape indicated by curve ④, as shown in Figure 2F. Accordingly, a ratio of the input luminance to the output luminance of the video signal is varied according to the gamma curve, and thus, the contrast ratio is varied depending upon the mean of the luminance of the video signal.

The system controller 91 may change the shape of the gamma curve based on the mean of the luminance of the video signal, as described above, to adjust the contrast ratio of the video signal. Additionally, the system controller 91 controls the signal processing module 50 to change the luminance of the video signal according to the shape-changed gamma curve.

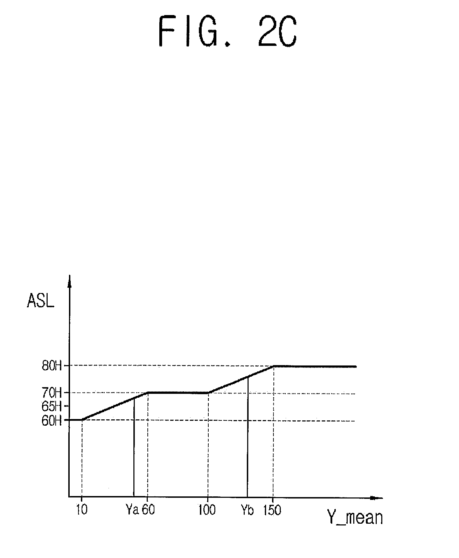

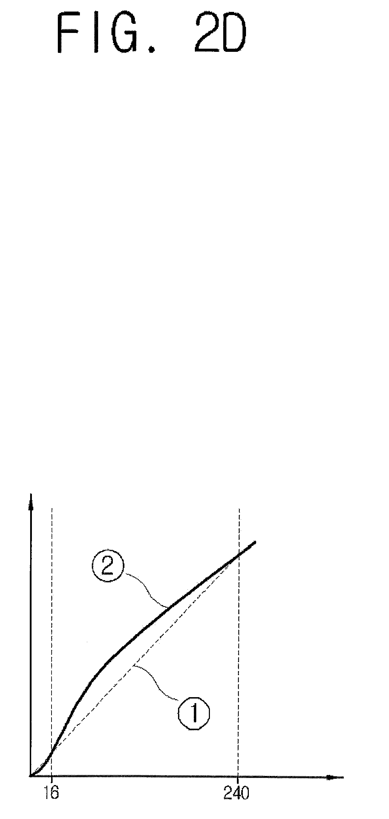

Additionally, the system controller 91 may adjust predetermined average signal level (ASL) data based on the mean of the luminance of the video signal. In other words, referring to Figure 2C, the average signal level data are changed depending upon the mean of the luminance of the video signal. For example, when the mean of the luminance changes from a point Ya to a point Yb, the average signal level data are varied accordingly. The system controller 91 and the driving controller 95 may control the panel drivers 71, 73 and 75 to adjust the contrast ratio of the video signal based on the adjusted average signal level data.

Specifically, the system controller 91 outputs a control signal controlling the average signal level data to the driving controller 91, and the driving controller 95 determines the number of sustain pulses depending upon the average signal level data and the luminance per pixel of the input video signal and outputs a control signal for the number of sustain pulses to the panel drivers 71, 73 and 75.

More specifically, upon receiving the video signal having a predetermined contrast ratio, the driving controller 95 of the controlling module 90 controls the panel drivers 71, 73 and 75 to adjust the number of sustain pulses corresponding to the contrast ratio of the video signal based on data stored in a predetermined look-up table. Then, the panel drivers 71, 73 and 75, that is, the address driver 73 which drives the address electrodes, the X electrode driver 75 which drives the X electrodes, and the Y electrode driver 71 which drives the Y electrodes, are driven to generate the predetermined number of sustain pulses for each portion of a screen according to the video signal. Then, each portion of the screen is displayed with the luminance of the video signal based on the sustain pluses.

At this time, when the controlling module 90 changes the average signal level data based on the mean of the luminance of the video signal, the controlling module 90 searches the look-up table based on the changed average signal level data and the input video signal. Then, based on a result of the search of the look-up table, the controlling module 90 determines the number of sustain pulses and transmits the determined number of sustain pulses to the panel drivers 71, 73 and 75. At this time, the display apparatus of the exemplary embodiments of the present invention may adjust the contrast ratio of the video signal by forcibly adjusting the number of sustain pulses based on the average signal level data in addition to adjusting the contrast ratio of the video signal according to the gamma curve based on the mean of the luminance of the video signal. Accordingly, the contrast ratio of the video signal may be dynamically enhanced.

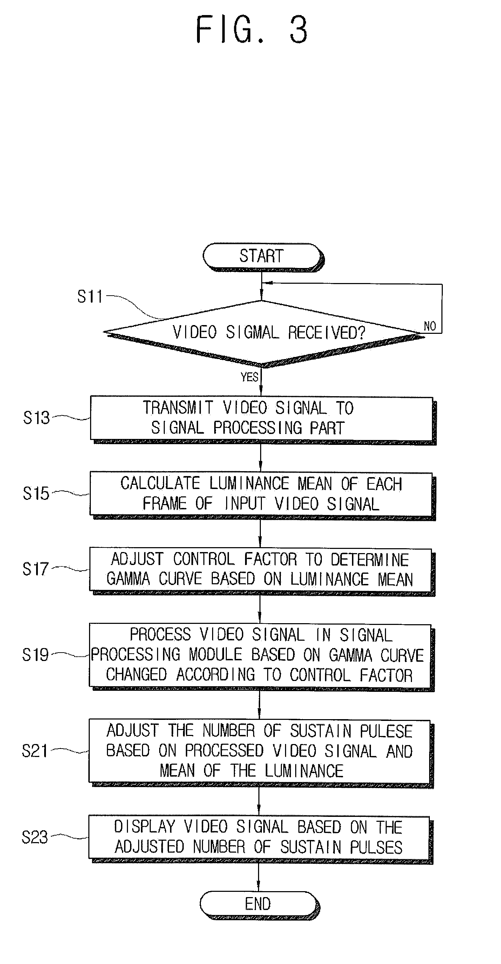

Hereinafter, a control method of the display apparatus according to the embodiment of the present invention will be described with reference to Figure 3. Referring to Figure 3, in the display apparatus of the exemplary embodiments of the present invention, when a video signal is input to the signal input module 10 at operation S11, the video signal is transmitted to the signal processing module 50 via the signal converting module 30 at operation S13. Then, the system controller 91 calculates the mean of the luminance for each frame of the video signal input to the signal processing module 50 at operation S15. Next, the system controller 91 adjusts control factors, for example, at least one of the upper contrast enhancement value CE_upper, the cutoff contrast enhancement value CE_cutoff, the upper alpha value Alpha_upper, the low alpha value Alpha_low, and the white tilt White_tilt, to determine a shape of a gamma curve based on the calculated mean of the luminance at operation S17. Subsequently, the system controller 91 controls the signal processing module 50 to process the video signal based on the gamma curve having the shape changed according to the control factors at operation S19.

In the meantime, the system controller 91 may further adjust predetermined average signal level (ASL) data based on the mean of the luminance of the video signal. When the average signal level data are adjusted, the number of sustain pulses which represent the luminance for each pixel of the video signal is forcibly adjusted. The driving controller 95 determines the number of sustain pulses based on the video signal according to the changed gamma curve and the average signal level data adjusted based on the mean of the luminance of the video signal at operation S21 and outputs control signals for the determined number of sustain pulses to the panel drivers 71, 73 and 75.

Specifically, when the video signal is input to the panel drivers 71, 73 and 75, the driver controller 95 determines the number of sustain pulses based on the luminance for each pixel of the video signal and outputs the determined number of sustain pulses to the panel drivers 71, 73 and 75. In the meantime, when the system controller 91 adjusts the average signal level data and outputs the adjusted average signal level data to the panel drivers 71, 73 and 75, the panel drivers 71, 73 and 75 recognize the video signal from the average signal level data. Additionally, the driving controller 95 searches the number of sustain pulses through a look-up table, based on the video signal processed according to the average signal level data, and outputs a control signal for the searched number of sustain pulses to the panel drivers 71, 73 and 75. Then, the panel drivers 71, 73 and 75 output sustain pulses according to the control signal from the driving controller 95, and the video signal is displayed on the display panel 77 based on the outputted sustain pulses at operation S23.

While it has been illustrated in the above exemplary embodiment that the controlling module 90 calculates the mean of the luminance of the video signal, this is not limitative. For example, the mean of the luminance of the video signal may be calculated by the signal processing module 50 itself and output to the controlling module 90.

While it has been illustrated in the above exemplary embodiment that the controlling module 90 includes the driving controller 95 and the system controller 91 for performing separate functions, this is not limitative. Additionally, the function of the driving controller 95 may be interchanged with that of the system controller 91.

According to the foregoing exemplary embodiments of the present invention, the display apparatus has high video quality since the contrast ratio of the video signal may be automatically adjusted in response to a variation of the luminance of frames of the video signal. Particularly, the display apparatus of the exemplary embodiments of the present invention can change the gamma curve and the average signal level data to properly adjust the contrast ratio of the video signal.

As apparent from the description, the exemplary embodiments of the present invention provide a display apparatus which calculates the mean of the luminance for each frame of a video signal and adjusts a contrast ratio of the video signal based on the calculated mean of the luminance, and a control method thereof.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A display apparatus comprising:

   a signal input module (10) which receives a video signal;
   a signal processing module (50) which processes the video signal received from the signal input module (10);
   a display module (70) which has a display panel (77) and a panel driver (71, 73, 75) to drive the display panel (77); and
   a controlling module (90) which calculates a luminance of the video signal and controls at least one of the signal processing module (50) and the panel driver (71, 73, 75) to adjust a contrast ratio of a video signal output to the display panel (77) based on a mean value of the calculated luminance.

2. The display apparatus according to claim 1, wherein the controlling module (90) calculates the mean of the luminance in a frame unit of the video signal.

3. The display apparatus according to claim 2, wherein the controlling module (90) adjusts a control factor to determine a gamma curve based on the mean of the luminance.

**4.** The display apparatus according to claim 3, wherein the controlling module (90) controls the signal processing module (50) to adjust the contrast ratio of the video signal based on the gamma curve determined by the control factor.

**5.** The display apparatus according to claim 4, wherein the controlling module (90) adjusts predetermined average signal level (ASL) data based on the mean of the luminance and controls the panel driver (71, 73, 75) to adjust the luminance of the video signal based on a video signal output from the signal processing module (50) and the average signal level data.

**6.** The display apparatus according to claim 1, wherein the display panel (77) comprises a plasma display panel, a plurality of address electrodes (A1-Am), a plurality of X electrodes (X1-Xn), and a plurality of Y electrodes (Y1-Yn), and
the panel driver (71, 73, 75) comprises an address driver (73) which drives the address electrodes (A1-Am), an X electrode driver (75) which drives the X electrodes (X1-Xn), and a Y electrode driver (71) which drives the Y electrodes (Y1-Yn).

**7.** The display apparatus according to claim 6, wherein the controlling module (90) adjusts a number of sustain pulses to determine the luminance of the video signal and controls the panel driver (71, 73, 75) to generate an adjusted number of sustain pulses.

**8.** The display apparatus according to claim 7, wherein the sustain pulses are generated by driving of an address driver (73), an X electrode driver (75) and a Y electrode driver (71) of the panel driver (71, 73, 75), and
the controlling module (90) outputs a control signal corresponding to the number of sustain pulses to the panel driver (71, 73, 75).

**9.** The display apparatus according to claim 8, wherein the controlling module (90) adjusts the gamma curve using at least one of an upper contrast enhancement value CE_upper, a cutoff contrast enhancement value CE_cutoff, an upper alpha value Alpha_upper, a low alpha value Alpha_low, and a white tilt White_tilt.

**10.** A control method of a display apparatus having a display panel (77) that comprises a plasma display panel, a plurality of address electrodes (A1-Am), a plurality of X electrodes (X1-Xn), and a plurality of Y electrodes (Y1-Yn), the control method comprising:

receiving a video signal;
calculating a luminance of the video signal; and
adjusting a contrast ratio of a video signal output to the display panel (77) based on a mean of the calculated luminance of the video signal.

**11.** The control method according to claim 10, wherein the calculating the luminance of the video signal comprises calculating the mean of the luminance in a frame unit of the video signal.

**12.** The control method according to claim 11, wherein the adjusting the contrast ratio of the video signal comprises:

adjusting a control factor to determine a gamma curve based on the mean of the luminance; and
adjusting the contrast ratio of the video signal based on a gamma curve determined by a control factor.

**13.** The control method according to claim 12, wherein the adjusting the contrast ratio of the video signal comprises:

adjusting predetermined average signal level (ASL) data based on the mean of the luminance; and
adjusting the luminance of the video signal based on the average signal level data.

**14.** The control method according to claim 13, wherein the adjusting the contrast ratio of the video signal comprises adjusting a number of sustain pulses to determine the luminance of the video signal and generating an adjusted number of sustain pulses.

# FIG. 1

# FIG. 2A

# FIG. 2B

# FIG. 2C

# FIG. 2D

# FIG. 2E

# FIG. 2F

# FIG. 3

```
                    ┌─────────────┐
                    │    START    │
                    └──────┬──────┘
                           │            ◄───────────┐
S11 ──────          ╱──────┴──────╲                 │
               ╱                       ╲             │
              ╱   VIDEO SIGNAL RECEIVED? ╲  NO ──────┘
               ╲                        ╱
                ╲──────────┬──────────╱
                           │ YES
          ┌────────────────┴────────────────┐
S13 ──────│   TRANSMIT VIDEO SIGNAL TO       │
          │     SIGNAL PROCESSING PART       │
          └────────────────┬────────────────┘
                           │
          ┌────────────────┴────────────────┐
S15 ──────│  CALCULATE LUMINANCE MEAN OF EACH │
          │    FRAME OF INPUT VIDEO SIGNAL    │
          └────────────────┬────────────────┘
                           │
          ┌────────────────┴────────────────┐
S17 ──────│  ADJUST CONTROL FACTOR TO DETERMINE │
          │ GAMMA CURVE BASED ON LUMINANCE MEAN │
          └────────────────┬────────────────┘
                           │
          ┌────────────────┴────────────────┐
          │    PROCESS VIDEO SIGNAL IN SIGNAL │
S19 ──────│ PROCESSING MODULE BASED ON GAMMA CURVE │
          │  CHANGED ACCORDING TO CONTROL FACTOR │
          └────────────────┬────────────────┘
                           │
          ┌────────────────┴────────────────┐
          │ ADJUST THE NUMBER OF SUSTAIN PULESE │
S21 ──────│ BASED ON PROCESSED VIDEO SIGNAL AND │
          │      MEAN OF THE LUMINANCE        │
          └────────────────┬────────────────┘
                           │
          ┌────────────────┴────────────────┐
          │ DISPLAY VIDEO SIGNAL BASED ON THE │
S23 ──────│ ADJUSTED NUMBER OF SUSTAIN PULSES │
          └────────────────┬────────────────┘
                           │
                    ┌──────┴──────┐
                    │     END     │
                    └─────────────┘
```